# EUROPEAN PATENT APPLICATION

(11) **EP 2 557 485 A1**
(43) Date of publication of application: **13.02.2013**
(21) Application number: 11765920.1
(22) Date of filing: 05.04.2011
(51) Int. Cl.: G06F 3/041

(54) **PRESSURE DETECTION UNIT AND INFORMATION INPUT DEVICE PROVIDED WITH PRESSURE DETECTION UNIT**

(30) Priority: 14.04.2010 JP 2010093509; 14.04.2010 JP 2010093508; 08.04.2010 JP 2010089588
(71) Applicant: Nissha Printing Co., Ltd., Kyoto-shi, Kyoto 604-8551 (JP)
(72) Inventor: SUZUKI Takahiro, Kyoto-shi Kyoto 604-8551 (JP); KAI Yoshihiro, Kyoto-shi Kyoto 604-8551 (JP); ENDO Yuko, Kyoto-shi Kyoto 604-8551 (JP); TAKAHASHI Kazumasa, Kyoto-shi Kyoto 604-8551 (JP); TAKAI Yuichiro, Kyoto-shi Kyoto 604-8551 (JP)
(74) Representative: Dicker, Jochen
(86) International application number: PCT/JP2011/058629
(87) International publication number: WO 2011/126020

(57) **Abstract**

A pressure detection unit 20 is disposed in a peripheral portion 4A of a panel member 4 of an information input device in order to detect a press operation to the panel member 4. The pressure detection unit 20 includes a first substrate 21, a second substrate 22 disposed to face the first substrate 21, pressure sensitive layers 23a, 23b disposed between the first substrate 21 and the second substrate 22 and a first electrode 21A provided on the first substrate 21 and a second electrode 22A provided on the second substrate 22 for detecting resistance change via the pressure sensitive layers 23a, 23b, respectively, the first electrode 21A and the second electrode 22A being provided at positions not facing each other on normal lines of the first substrate 21 and the second substrate 22.

## Description

### Technical Field

The present invention relates to a pressure detection unit for an information input device enabling input of information through detection of a press operation to a panel member and relates also to the information input device having the pressure detection unit.

### Background Art

As an information input device including a panel member having an information input functions, a device having a touch panel disposed on a liquid crystal display is being widely used. In the case of a digital camera having a liquid crystal monitor, there is known one configured such that on an upper face of the liquid crystal monitor there is disposed a panel member capable of detecting a contact position and a press force, so that in accordance with the strengths of the press at the time of contact, different instructions are given (see e.g. Patent Document 1, Fig. 36).

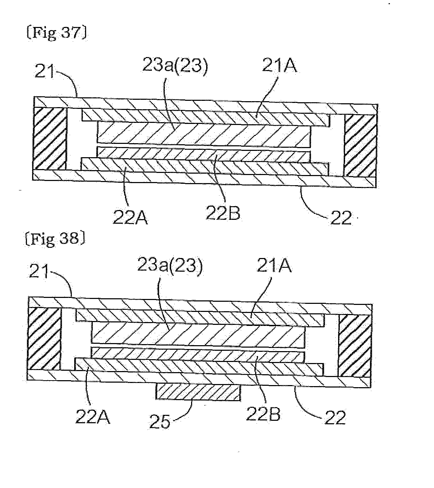

In a pressure detection unit 20 to be mounted on the information input device described above, for example, as shown in Fig. 37, between the first substrate 21 and the second substrate 22, from the side of the second substrate 22, there are arranged a second electrode 22A, a carbon layer 22B, a pressure sensitive ink layer 23a and a first electrode 21A in this mentioned order, so that the detection unit determines a pressure when the touch panel or the like is pressed down, and information in accordance with a determined pressure value is instructed for its input.

### Prior Art Document

### Patent Document

Patent Document 1: Japanese Unexamined Patent Application Publication No. 11-355617

### Summary of the Invention

In the pressure detection unit shown in Fig. 37, on the second electrode 22A on the side of the second substrate 22, the carbon layer 22B is printed as being superposed thereon, a pressure sensitive ink layer 23a is coated on the carbon layer 22B, and the first electrode 21A is provided on the other side of the first substrate 21. In this case, as compared with the carbon layer 22B, the electrode portions 21A, 22B have more unevenness in their thicknesses and on their surfaces thereof. So, it sometimes happens that the surface of the carbon layer 22B contacting the pressure sensitive ink layer 23a is not smooth and flat. This results in instability in the condition of contact between the pressure sensitive ink layer 23a and the electrode layers 22A, 22B. As a result, this can also be a cause of irregularity in the sensitivity of the pressure detection unit.

In the case of a pressure detection unit shown in Fig. 38, for enabling effective transmission of a load inputted from the outside to the pressure sensitive ink layer 23a, a load transmission member 25 is disposed on the side of the second substrate 22 opposite the second electrode 22A, with the load transmission member 25 being located immediately below the pressure sensitive layer 23.

However, in the case of the arrangement wherein the pressure detection unit is disposed in a peripheral portion of the panel member 4, in response to a press operation to the center portion of the panel member 4, a certain amount of bending deformation will occur in the panel member 4, which leads to a change in the posture of the panel member 4 also in the periphery of the panel member 4 as seen in the side view in section. With such change in the posture of the panel member 4, the postures of the first substrate 21 and the second substrate 22 will also change. Therefore, even if the load transmission member 25 is provided on the second substrate 22, a load inputted form the outside may sometimes be not transmitted sufficiently to the pressure sensitive layer 23.

The object of the present invention is to obtain a pressure detection unit having improved accuracy in sensitivity and an information input device having the pressure detection unit, so that the information input device may effect more reliable information input with a press operation.

According to a first characterizing feature of a pressure detection unit relating to the present invention, a pressure detection unit disposed in a peripheral portion of a panel member of an information input device in order to detect a press operation to the panel member, the pressure detection unit comprises: a first substrate; a second substrate disposed to face the first substrate; pressure sensitive layers disposed between the first substrate and the second substrate; and a first electrode provided on the first substrate and a second electrode provided on the second substrate for detecting resistance change via the pressure sensitive layers, respectively; wherein the first electrode and the second electrode are provided at positions not facing each other on normal lines of the first substrate and the second substrate.

In forming a pressure detection unit in an information input device, for instance, pressure sensitive layers are formed on the first electrode, and these respective layers are formed by applying an amount of layer forming material. In this, since the electrode portion has unevenness in its thickness and/or its surface, the surface of the finished pressure sensitive layer is not always formed flat and smooth. Similarly, on the second electrode too, a pressure sensitive layer will be formed if necessary. In this case, when the pressure sensitive layers are pressed between and by the first substrate and the second substrate by applying a press force to the panel member, it may sometimes happen that the pressure sensitive layers or the pressure sensitive layer and the electrode fail to come into contact with each other through the flat surfaces, but convex portions thereof come into contact with each other. As a result, the electrical conduction state between the contacting components is not stable, so the pressure detection unit functions in an unstable manner.

However, with the above-described arrangement, since the first electrode and the second electrode are provided at positions not facing each other on normal lines of the first substrate and the second substrate, the influence of the irregularity in the thickness or surface of the electrode portion affecting the pressure sensitive layers can be alleviated. As a result, there can be obtained a pressure detection unit having improved contact state between the pressure sensitive layers and the electrodes. Further, even when the pressure detection unit is pressed, this does not result in direct pressing of the first electrode and second electrode against each other. Therefore, such inconvenience of mutual pressing between electrodes leading to damage thereof can be restricted and the durability of the pressure detection unit can be improved.

According to a second characterizing feature of the pressure detection unit according to the present invention, at least one of the first electrode and the second electrode is provided at a position not overlapped with a pressure sensitive area where the pressure sensitive layers are compressed when the pressure detection unit is pressed.

With this arrangement, since either one of the electrodes is provided at a position not overlapped with the pressure sensitive area, the pressure sensitive area can be free from the influence of the irregularity in the thickness or surface of the electrode portion. Therefore, the possibility of the surface of a least one of the pressure sensitive layers in this area being smooth and flat becomes higher. As a result, the contact state between the pressure sensitive layers and the electrodes is improved and the pressure detection characteristics becomes stable, so that a pressure detection unit having even higher reliability can be obtained. Consequently, it has become possible for the information input device to achieve reliable information input with a press operation.

According to a third characterizing feature of the pressure detection unit according to the present invention, the first electrode and the second electrode are provided at positions not overlapped with the pressure sensitive area.

With the above arrangement of both electrodes being provided at positions not overlapped with the pressure sensitive area, it becomes possible to provide the surfaces of both components, i.e. the first electrode and the second electrode, with smooth and flat finish. Therefore, the contact of the pressure sensitive layers in the pressure sensitive area becomes even more reliable, so that a pressure detection unit with even higher reliability can be obtained.

According to a fourth characterizing feature of the pressure detection unit relating to the present invention, at least one of the fast electrode and the second electrode is coated with an electrically conductive layer.

In case the electrode of the pressure detection unit is coated directly with the pressure sensitive layer, depending on the characteristics of the material used in the electrode, the electrode may be damaged by the compressed pressure sensitive layer. With the above-described arrangement, however, since the electrode is protected as being coated with an electrically conductive layer, the electrode can be less vulnerable to damage or the like. As a result, the durability of the pressure detection unit is improved.

According to a fifth characterizing feature of the pressure detection unit relating to the present invention, the pressure detection unit further comprises: a first electrically conductive layer coating the first electrode and a second electrically conductive layer coating the second electrode; wherein the first electrically conductive layer includes a first extension portion extending laterally relative to the first electrode, the second electrically conductive layer includes a second extension portion extending laterally relative to the second electrode; the pressure sensitive layers coat at least one of the first extension portion and the second extension portion; and when the pressure detection unit is pressed, the pressure sensitive layers are compressed only by the first electrically conductive layer relating to the first extension portion and the second electrically conductive layer relating to the second extension portion.

With the above arrangement, in forming the first electrically conductive layer and the second electrically conductive layer, electrically conductive layers having extremely smooth and flat surfaces can be formed in the region where the first electrode and the second electrode which per se are projections are not existent. Also, when the pressure sensitive layer is formed on the surface of one of these electrically conductive layers, since the electrically conductive layer as the base therefor is smooth and flat, a pressure sensitive layer having substantially same smoothness as the electrically conductive layer can be obtained. Therefore, with the arrangement of the pressure sensitive layers being compressed only in the regions of the first extension portion and the second extension portion, the contact may be rendered appropriate over a larger area, so that a pressure detection unit having stable detection characteristics can be obtained.

According to a sixth characterizing feature of the pressure detection unit relating to the present invention, the first electrically conductive layer and the second electrically conductive layer are comprised of carbon layers containing carbon particles mixed with binder .

Normally, carbon particles are available in variety of particle sizes. Then, by mixing such carbon particles in the binder and applying the resultant mixture, it is possible to obtain smooth electrically conductive layers having fine surface characteristics. Therefore, since it becomes possible to obtain a large contact area in compressing the pressure sensitive layers, it is possible to obtain a pressure detection unit having superior electrical conductivity characteristics.

According to a seventh characterizing feature of the pressure detection unit relating to the present invention, the pressure detection unit further comprises a load transmission member provided on the outer face of at least one of the first substrate and the second substrate for applying a concentrated load to the pressure sensitive layers.

With the above arrangement, when a load is applied from the outside to the pressure detection unit, as the load transmission member supports the pressure detection unit, the external load can be received in a concentrated manner without dissipation thereof and this load can be transmitted reliably to the pressure sensitive layers. As the pressure sensitive layers are pressed reliably as described above, the detection accuracy of the pressure detection unit can be improved.

According to an eighth characterizing feature of the pressure detection unit relating to the present invention, a pressure detection unit disposed in a peripheral portion of a panel member of an information input device in order to detect a press operation to the panel member, the pressure detection unit comprises: a first substrate; a second substrate disposed to face the first substrate; pressure sensitive layers disposed between the first substrate and the second substrate; and a first electrode provided on the first substrate and a second electrode provided on the second substrate for detecting resistance change via the pressure sensitive layers, respectively; and a load transmission member provided on the outer face of at least one of the first substrate and the second substrate for applying a concentrated load to the pressure sensitive layers: and wherein relative to a pressure sensitive area formed by compression of the pressure sensitive layers when the pressure detection unit is pressed, as seen along the direction of normal line of the panel member, a portion of the edge of the load transmission member is overlapped with the pressure sensitive area and the rest of the edge is not overlapped with the pressure sensitive area.

When the pressure detection unit is pressed, the first substrate or the second substrate receives a local load from the load transmission member. Then, there occurs a certain amount of bending deformation in the panel member and in the periphery of the panel member also, there occurs a change in the posture of the panel member sideways as seen in the cross section. In association with this, there occurs a change also in the posture of the first substrate or the second substrate. As a result, the contact posture of the load transmission member relative to the first substrate or the second substrate will change.

According to the present invention, in order to utilize such change in the relative posture between the first or the second substrate and the load transmission member, an arrangement is provided such that a portion of the edge of the load transmission member is overlapped with the pressure sensitive area and the rest of the edge is not overlapped with the pressure sensitive area as seen along the direction of normal line of the panel member. That is, when the first substrate or the second substrate contacting the load transmission member is inclined, the edge of the load transmission member functions as a corner portion, thus applying a localized press force to the first substrate or the like. With this, it becomes possible for the pressure detection unit to detect even a small and weak press force in a reliable manner. Hence, the detection characteristics of the pressure detection unit can be improved.

According to a ninth characterizing feature of the pressure detection unit relating to the present invention, the first substrate and the second substrate are connected with each other via a connecting portion at a position different from the pressure sensitive area, as seen along the direction of the normal line of the panel member, a portion of the rest of the edge of the load transmission member is overlapped with the connecting portion.

According to the ninth arrangement of the pressure detection unit relating to the present invention, the first substrate and the second substrate are connected with each other via a connecting portion at a position different from the pressure sensitive area. In the case of this arrangement, when the first substrate and the second substrate are pressed against each other in response to pressing of the pressure detection unit, the connecting portion functions like a "knot". More particularly, it may become difficult for the first substrate and the second substrate to come closer to each other at the area of the connecting portion. Hence, there arises the possibility of the press force to the pressure detection unit being not sufficiently transmitted to the pressure sensitive area.
Then, with the above-described arrangement that as seen along the direction of the normal line of the panel member, the edge of the load transmission member is overlapped with the pressure sensitive area, the edge of the load transmission member functions as a corner portion, so that via this portion, the pressure sensitive layers can be pressed in a reliable manner.

When the first substrate and the second substrate approach each other and are deformed when the pressure detection unit is pressed, at the portion of the connecting portion, the amount of change in the distance between the first substrate and the second substrate is smaller than e.g. the amount of change in the pressure sensitive area. Then, when the panel member is deformed as receiving a press force, a greater load will be applied to a portion where mutual approaching between the first substrate and the second substrate is easier, that is, at a portion corresponding to the pressure sensitive area.

In view of the above, the above arrangement wherein the position of one edge of the load transmission member is provided as the portion of the connecting portion so that the first substrate or the second substrate may be flexed relative to this position as the pivot will be most reasonable. That is, this will eliminate the necessity of extending the load transmission member from the position of the contacting portion toward the side of the pressure sensitive area and extending it even further. Rather, by avoiding excessive extension of the load transmission member, there will be no component that would restrict the first substrate or the second substrate, so that there is obtained greater freedom in the deformation at this portion. As a result, it becomes possible for the first substrate or the like to be bent or flexed even greatly, thus increasing the press-in amount of the pressure sensitive area by the portion of the edge of the load transmission member. In this way, there can be obtained a pressure detection unit having even superior detection characteristics.

According a tenth characterizing feature of the pressure detection unit relating to the present invention, as seen along the direction of normal line of the panel member, a portion of the rest of the edge of the load transmission member is located on the outer edge side of the panel member relative to the pressure sensitive area; and at the outer edge of the panel member, the edge of the first substrate, the connecting portion, the edge of the second substrate and a potion of the rest of the edge are overlapped with each other.

With the above arrangement, the edge of the first substrate, the connecting portion, the edge of the second substrate and a potion of the rest of the edge are overlapped with each other at the outer edge of the panel member. With this, this portion functions as a reaction force receiving portion when a press force is applied to the panel member. Then, the panel member will be flexed and deformed with the center portion thereof being pushed in, relative to this edge portion as the pivot thereof. With the provision of such reaction force receiving portion in the outermost edge of the panel member and resultant increase of the distance from the center position of the panel member, it becomes possible to cause the panel member to be deformed maximally in response to application of a same press force.

On the other hand, of the load transmission member, the other edge thereof is located at the position in the pressure sensitive area, so that this edge portion will press the pressure sensitive area in a concentrated manner. In this, since the arrangement is provided for allowing maximal flexing deformation of the panel member as described above, the amount of pressing to the pressure sensitive layers will be increased and the detection sensitivity of the pressure detection unit will be improved.

According to an eleventh characterizing feature of the pressure detection unit relating to the present invention, the first electrode and the second electrodes are provided at positions not facing each other on the normal lines of the first substrate and the second substrate.

In forming a pressure detection unit in an information input device, for instance, pressure sensitive layers are formed on the first electrode, and these respective layers are formed by applying an amount of layer forming material. In this, since the electrode portion has unevenness in its thickness and/or its surface, the surface of the finished pressure sensitive layer is not always formed flat and smooth. Similarly, on the second electrode too, a pressure sensitive layer will be formed if necessary. In this case, when the pressure sensitive layers are pressed between and by the first substrate and the second substrate by applying a press force to the panel member, it may sometimes happen that the pressure sensitive layers or the pressure sensitive layer and the electrode fail to come into contact with each other through the flat surfaces, but convex portions thereof come into contact with each other. As a result, the electrical conduction state between the contacting components is not stable, so the pressure detection unit functions in an unstable manner.

However, with the above-described arrangement, since the first electrode and the second electrode are provided at positions not facing each other on normal lines of the first substrate and the second substrate, the influence of the irregularity in the thickness or surface of the electrode portion affecting the pressure sensitive layers can be alleviated. As a result, there can be obtained a pressure detection unit having improved contact state between the pressure sensitive layers and the electrodes. Further, even when the pressure detection unit is pressed, this does not result in direct pressing of the first electrode and second electrode against each other. Therefore, such inconvenience of mutual pressing between electrodes leading to damage thereof can be restricted and the durability of the pressure detection unit can be improved.

According to a first characterizing feature of a pressure sensitive sensor relating to the present invention, the pressure sensitive sensor comprises: the pressure detection unit according to any one of the above-described first through eleventh characterizing features, the pressure detection unit being provided in a peripheral portion of a panel which peripheral portion is fixed to a housing body in order to detect a press operation to the panel member; and a floating prevention mechanism for preventing floating of the corner portion of the panel member off the housing body when a press operation is effected to the panel member.

With the above-described arrangement, since there is provided a floating prevention mechanism for preventing floating of the corner portion of the panel member off the housing body, it is possible to prevent floating of the corner portion, which floating leads to inaccuracy in the output of the pressure detection unit, which leads in turn to deterioration in the accuracy of the pressure sensitive sensor. Further, with prevention of floating of the corner portion, the flexion of the panel member can be smaller, so that it becomes possible to render uniform the in-plane sensitivity distribution. As a result, it becomes possible to restrict variation in the accuracy of the pressure sensitive sensor, depending on the position of the press operation.

According to a second characterizing feature of the pressure sensitive sensor relating to the present invention, the floating prevention mechanism comprises a bonding portion of the corner portion formed wider than a bonding area in the peripheral portion excluding the corner portion.

With the above-described configuration of the floating prevention mechanism by forming the bonding portion of the corner portion with greater width, in manufacturing the pressure sensitive sensor, there is no need to provide any separate member or to add any new manufacturing step. Hence, it is possible to prevent deterioration in the accuracy of the pressure sensitive sensor with restriction of cost increase.

According to a third characterizing feature of the pressure sensitive sensor relating to the present invention, the pressure detection unit is provided only in the area excluding the corner portion.

With the above-described arrangement, the pressure detection unit is not present at the corner portion where the floating of the panel member tends to occur. Therefore, even if the floating of the corner portion should occur, it is possible to restrict the deterioration in the sensor accuracy due to its influence. Further, in case a plurality of sensor detection units are provided separately, the number thereof can be reduced. In case the pressure detection unit is provided over the entire area of the peripheral portion, a portion thereof becomes unnecessary. So that, cost reduction is made possible at the same time.

According to a first characterizing feature of an information input device relating to the present invention, the information input device comprises: a panel member capable of receiving input instruction by a press operation; a support portion provided in a device body for supporting the peripheral portion of the panel member; and the pressure detection unit according to any one of the first through eleventh features provided between the panel member and the support portion.

According to a second characterizing feature of the information input device relating to the present invention, the pressure sensitive sensor according to any one of the first through third characterizing features is sandwiched between the housing body and the panel member.

With the above-described arrangements, with the pressure detection unit having improved detection characteristics, information input by a press operation to a panel member in the information input device can be effected in a stable manner.

### Brief Description of the Drawings

[Fig. 1] is a perspective view of an information input device including a pressure detection unit relating to the present invention,
[Fig. 2] is a section along II-II in Fig. 1,
[Fig. 3] is a view showing layout of the pressure detection unit in the information input device,
[Fig. 4] is an enlarged section showing the vicinity of the pressure detection unit of Fig. 2,
[Fig. 5] is a section showing a different configuration of an information input device,
[Fig. 6] is an enlarged section showing the vicinity of a pressure detection unit according to Embodiment 2,
[Fig. 7] is an enlarged section showing the vicinity of a pressure detection unit according to Embodiment 3,
[Fig. 8] is an enlarged section showing operational condition of the pressure detection unit according to Embodiment 3,
[Fig. 9] is an enlarged section showing the vicinity of a pressure detection unit according to Embodiment 4,
[Fig. 10] is an enlarged section showing the vicinity of a pressure detection unit according to Embodiment 5,
[Fig.11] is an enlarged section showing the vicinity of a pressure detection unit according to Embodiment 6,
[Fig. 12] is an enlarged section showing operational condition of the pressure detection unit according to Embodiment 6,
[Fig.13] is an enlarged section showing the vicinity of a pressure detection unit according to Embodiment 7,
[Fig. 14] is an enlarged section showing operational condition of the pressure detection unit according to Embodiment 7,
[Fig.15] is an enlarged section showing the vicinity of a pressure detection unit according to Embodiment 8,
[Fig.16] is an enlarged section showing the vicinity of a pressure detection unit according to Embodiment 9,
[Fig. 17] is an enlarged section showing operational condition of the pressure detection unit according to Embodiment 10,
[Fig.18] is an enlarged section showing the vicinity of a pressure detection unit according to Embodiment 11,
[Fig. 19] is a perspective view showing an information input device according to a further embodiment,
[Fig. 20] is an exploded perspective view showing a pressure detection unit according to a further embodiment,
[Fig. 21] is a plane view showing layout of a floating prevention mechanism according to a further embodiment,
[Fig. 22] is a section along XXII-XXII in Fig. 21,
[Fig. 23] is a section along XXIII-XXIII in Fig. 21,
[Fig. 24] is a plane view showing layout of a floating prevention mechanism according to a further embodiment,
[Fig. 25] is a section along in Fig. 24,
[Fig. 26] is a plane view showing layout of a floating prevention mechanism according to a further embodiment,
[Fig. 27] is a section along XXVII-XXVII in Fig. 26,
[Fig.28] is an enlarged section showing the vicinity of a pressure detection unit according to a further embodiment,
[fig.29] is an enlarged section showing the vicinity of a pressure detection unit according to a further embodiment,
[Fig.30] is an enlarged section showing the vicinity of a pressure detection unit according to a further embodiment,
[Fig.31] is an enlarged section showing the vicinity of a pressure detection unit according to a further embodiment,
[Fig.32] is an enlarged section showing the vicinity of a pressure detection unit according to a further embodiment,
[Fig.33] is an enlarged section showing the vicinity of a pressure detection unit according to a further embodiment,
[Fig.34] is an enlarged section showing the vicinity of a pressure detection unit according to a further embodiment,
[Fig.35] is view showing layout of a pressure detection unit in an information input device according to a further embodiment of the present invention,
[Fig. 36] is a section view showing an information input device relating to the prior art,
[Fig. 37] is a section view showing a pressure detection unit relating to the prior art, and
[Fig. 38] is a section view showing a pressure detection unit relating to the prior art.

### Modes of Embodying the Invention

Next, embodiments of an information input device 1 relating to the present invention will be described with reference to the accompanying drawings.

### [Embodiment 1]

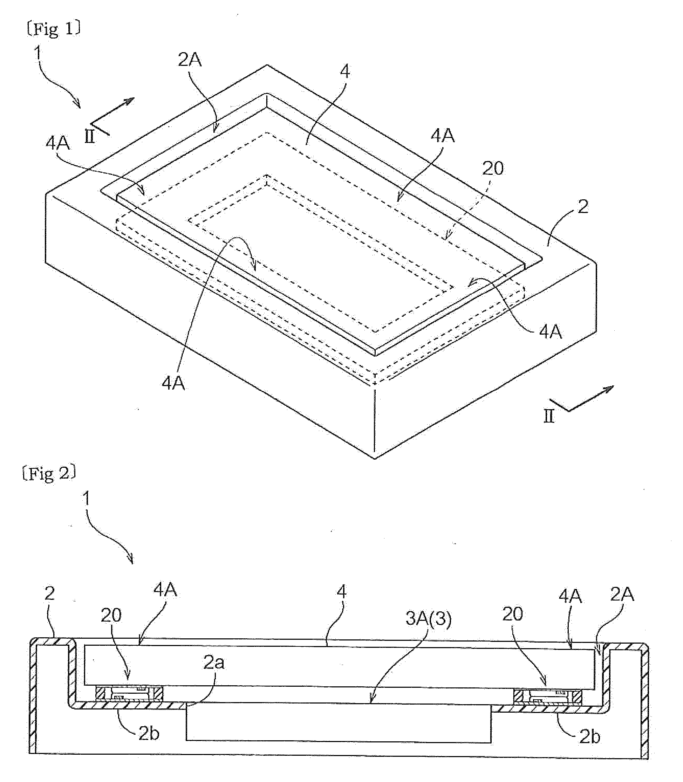

As shown in Fig. 1 and Fig. 2, an information input device 1 includes a housing body 2 forming an opening 2A or the like in its front face which mounts therein a display device 3 having a display portion 3A formed of liquid crystal, organic EL, etc. and mounts also a panel member 4 having a touch type information input function.

In the present invention, the opening 2A of the housing body 2, as shown in Fig. 2, is formed by cutting out the upper face of the housing body 2 so as to form a step for allowing fitting-in of the panel member 4. And, on the bottom face thereof, there are provided a display device opening 2a for exposing the display portion 3A of the display device 3 mounted inside the housing body 2 to the outside, and a frame-like support portion 2b for supporting a peripheral portion 4A of the panel member 4.

The shape and dimension of the opening 2A can vary in many ways, in accordance with the shape and size of the panel member 4. Further, the mounting depth of the opening 2A too can vary in many ways in accordance with e.g. the thickness of the panel member 4. Moreover, the shape and size of the display device opening 2a of the opening 2A can vary in many ways, in accordance with the shape and size or the like of the display portion 3A. In this embodiment, the opening 2A, the display device opening 2a, the display portion 3A and the panel member 4 each have a rectangular or approximately rectangular shape. However, the shapes of the panel member 4, etc. are not particularly limited, but can be circular, for example. The mounting depth of the opening 2A can be set so that the surface of the housing body 2 may be in substantially same level as the surface of the panel member 4.

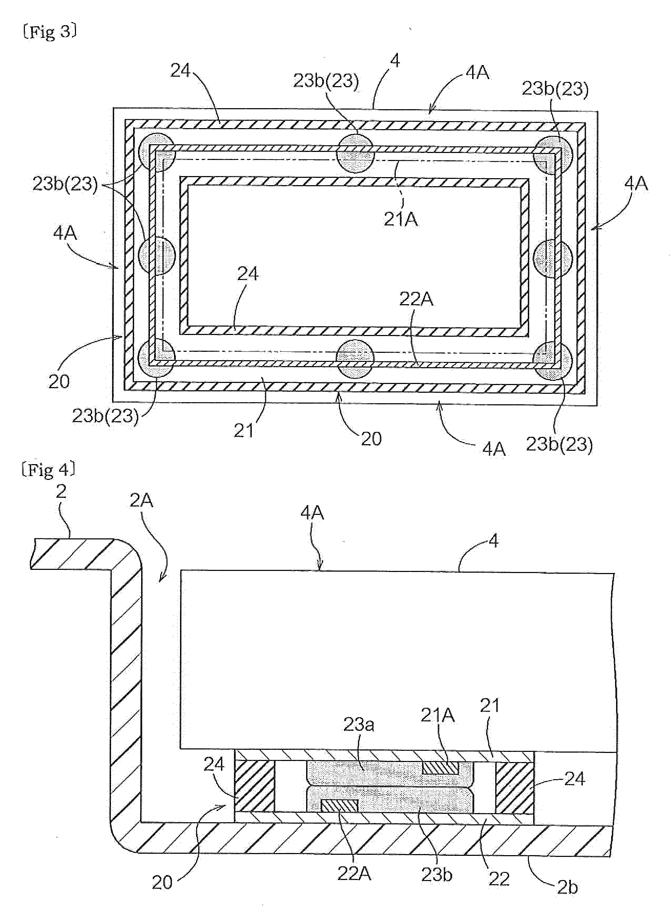

The information input device 1 includes a pressure detection unit 20 (or "a pressure detection portion") capable of detecting a press operation to the panel member 4. The pressure detection unit 20 is disposed between the panel member 4 and the support portion 2b of the housing body 2 and includes e.g. an unillustrated signal processing circuit for processing output signals. The configuration of the pressure detection unit 20 is not particularly limited as long as it is capable of detecting a pressing pressure. As shown in Fig. 1 and Fig. 3, as the pressure detection unit 20, at least one thereof is provided in the peripheral portion 4A of the panel member 4. The panel member 4 may have the so-called touch input function for detecting X-Y coordinates of an operational position, based on a touch operation to the panel member 4. Of the member having the touch input function, it can be selected from the resistive film type, the electrostatic capacitance type, electromagnetic induction type, etc.

Referring to the pressure detection unit 20, as shown in Fig. 4, on the side of the panel member 4, a frame-like first substrate 21 is disposed and on the side of the support portion 2b, there is disposed a frame-like second substrate 22 facing the first substrate 21. On the first substrate 21, a first electrode 21A is disposed relatively on the side of the inner side of the panel member 4. The first electrode 21A is coated or covered with an upper pressure sensitive ink layer (or "an upper pressure sensitive ink") 23a as a pressure sensitive layer 23. On the other hand, on the second substrate 22, a second electrode 22A is disposed relatively on the side of the outer side of the panel member 4 and is coated or covered with a lower pressure sensitive ink layer (or "a lower pressure sensitive ink") 23b as another pressure sensitive layer 23.

More particularly, the first electrode 21A and the second electrode 22A are disposed at positions not facing each other on the normal lines of the first substrate 21 and the second substrate 22. Hence, when the first electrode 21A is pressed against the pressure sensitive layer 23, the second electrode 22A does not hinder the pressing of the first electrode 21A. Further, conversely, when the second electrode 22A is pressed against the pressure sensitive layer 23, the first electrode 21A does not hinder the pressing of the second electrode 22A. As a result, there can be obtained a pressure detection unit 20 having improved contact conditions between the pressure sensitive layers 23 and the first and second electrodes 21A, 22A. Further, when the pressure detection unit 20 is pressed, there occurs no direct mutual pressing between the first electrode 21A and the second electrode 22A. Therefore, it is possible to restrict occurrence of frictional wear of the electrodes which could occur with repeated mutual pressing between the electrodes, so that the durability of the pressure detection unit 20 is improved.

As shown in Fig. 3 and Fig. 4, the inner sizes of the frame-like first substrate 21 and second substrate 22 are matched with the size of the opening 2A, and the outer sizes thereof are matched with an X-Y coordinates detection device (not shown) provided separately. On the face of the first substrate 21 facing the second substrate 22, the first electrode 21A is disposed in the form of a frame, and on the face of the second substrate 22 facing the first substrate 21, the second electrode 22A is disposed in the form of a frame, and the second electrode 22A is disposed to face the position on the opposite side of the center of the panel member relative to the first electrode 21A. That is, as the first electrode 21A and the second electrode 22A are disposed with a spacing therebetween in the horizontal direction, insulating treatment of the first electrode 21A and the second electrode 22A at the portion where the pressure detection unit 20 is not provided can be lessened.

The pressure detection unit 20 is attached to the opening 2A as the second substrate 22 is bonded on the support portion 2b by means of e.g. an adhesive agent (not shown).

In the area where the first substrate 21 and the second substrate 22 face each other and on the opposite sides of the pressure sensitive layer 23, there is provided a connecting portion 24. This connecting portion 24 may comprise e.g. an adhesive bonding agent or a double-face bonding material having elasticity and is formed in a thickness substantially equal to or greater than the combined thickness of the second electrode 22A, the lower pressure sensitive ink layer 23b, the upper pressure sensitive ink layer 23a and the first electrode 21A. In the illustration of Fig. 4, the electrodes and the pressure sensitive ink layers are spaced apart from the connecting portion 24. However, the pressure sensitive ink layers may be partially in contact with the connecting portion 24.

Next, operations of the pressure detection unit 20 mounted in the information input device 1 will be described. Inside the information input device 1, the first electrode 21A and the second electrode 22A are connected to a connector (not shown) and this connector is connected to a load detection unit (not shown) incorporated in the information input device 1.

The pressure detection unit 20 detects change in resistance between the first electrode 21A and the second electrode 22A via the upper pressure sensitive ink layer 23a and the lower pressure sensitive ink layer 23b which occurs in the pressure sensitive layers 23 at the time of a press operation to the panel member 4. Through detection of this resistance change, the external force applied to the pressure sensitive layer 23 can be detected and the load to the panel member 4 can be detected.

The first substrate 21 and the second substrate 22 of the pressure detection unit 20 can be e.g. films or the like and material forming the same can be one usable for flexible substrates, e.g. general-purpose engineering resin such as polyethylene terephthalate, polystyrene resin, polyolefin resin, ABS resin, AS resin, acrylic resin, AN resin, general-engineering resin such as polystyrene resin, polycarbonate resin, polyacetal resin, polycarbonate modified polyphenylene ether resin, polybutylene terephthalate resin, ultrahigh molecular weight polyethylene resin, or a super-engineering resin such as polysulfone resin, polyphenylene sulfide resin, polyphenylene oxide resin, polyarylate resin, polyetherimide resin, polyimide resin, liquid crystal polyester resin, polyallyl heat resistant resin, etc.

As the material for forming the first electrode 21A and the second electrode 22A of the pressure detection unit 20, it is possible to employ a metal such as gold, silver, copper, nickel, etc. or a paste having electrical conductivity containing carbon or a plurality of species of material above. As the method for forming these, a printing method such as screen printing, offset printing, gravure printing, or flexo printing or a photoresist method can be cited. Further, the first electrode 21A and the second electrode 22A can be formed by affixing a metal foil of copper, gold, or the like. Further alternatively, the first electrode 21A and the second electrode 22A can be formed also by forming electrode patterns with using a resist on an FPC plated with a metal such as copper and then effecting an etching treatment on the portion of the metal foil not protected with the resist. The electrodes can be formed and laminated with any desired combination of the forming methods and materials mentioned above.

The composition constituting the upper pressure sensitive ink layer 23a and the lower pressure sensitive ink layer 23b of the pressure detection unit 20 comprises a material whose electrical characteristics such as the electrical resistance value varies in response to an external force. As this composition, e.g. a quantum tunnel phenomenon material (commercial name "QTC") available from Peratech Limited in U.K. can be employed. The upper pressure sensitive ink layer 23a and the lower pressure sensitive ink layer 23b can be provided on the first substrate 21 and the second substrate 22 by means of applying thereof. As the method for applying the upper pressure sensitive ink layer 23a and the lower pressure sensitive ink layer 23b, a printing method such as screen printing, offset printing, gravure printing, or flexo printing can be employed.

At least one pressure detection unit 20 is provided, and the unit 20 is respectively bonded to the lower face of the panel member 4 of the information input device 1 by means of an adhesive agent such as paste, or an adhesive layer such as a double-sided bonding tape. And, the pressure detection unit 20 is provided so as to be covered by the ornamental portion in the peripheral portion 4A of the panel member 4. Therefore, the respective components constituting the pressure detection unit 20 need not be formed of a transparent material, but may be formed of a colored material.

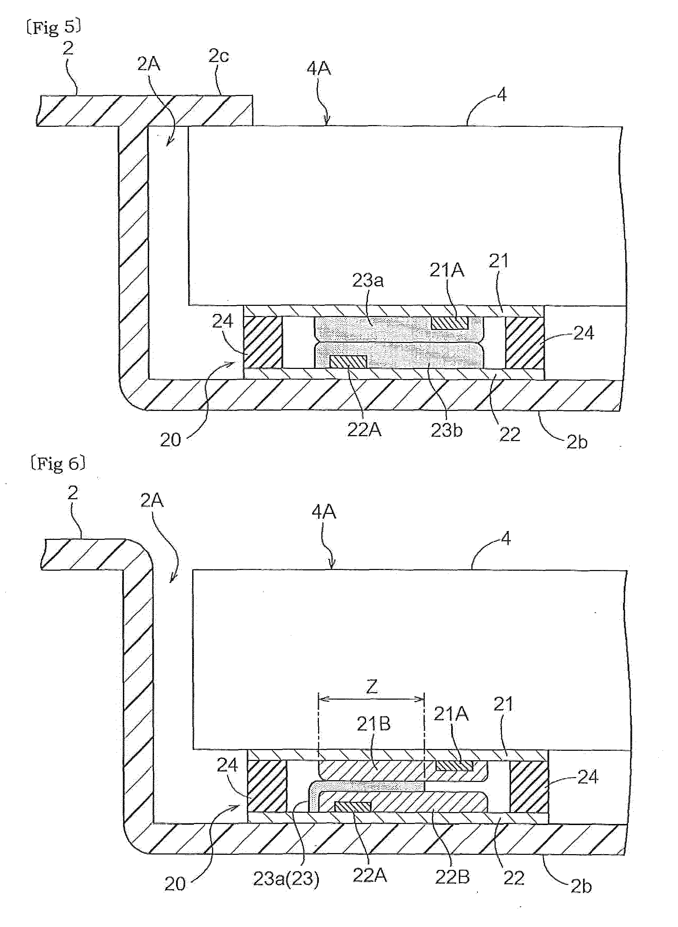

Incidentally, the housing body 2 of the information input device 1, as shown in Fig. 5, may be of a shape having a bezel 2c upwardly of the panel member 4. If such bezel 2c is provided in the housing body 2, the peripheral portion 4A of the panel member 4 and the pressure detection unit 20 disposed in this peripheral portion 4A can be clamped and fixed by the support portion 2b and the bezel 2c of the housing body 2.

### [Embodiment 2]

In this embodiment, as shown in Fig. 6, on the side of the panel member 4, a frame-like first substrate 21 is disposed and on the side of the support portion 2b, there is disposed a frame-like second substrate 22 on the side of the support portion 2b facing the first substrate 21. On the first substrate 21, a first electrode 21A is disposed relatively on the side of the inner side of the panel member 4. The first electrode 21A is coated or covered with a first electrically conductive layer 21B. On the other hand, on the second substrate 22, a second electrode 22A is disposed relatively on the side of the outer side of the panel member 4 and is coated or covered with a second electrically conductive layer 22B. Further second electrically conductive layer 22B is coated with a pressure sensitive ink layer 23a as another pressure sensitive layer 23.

The surface of the pressure sensitive ink layer 23a coating the second electrode 22B faces the first electrically conductive layer 21B. Therefore, when the pressure detection unit 20 is pressed by the panel member 4, there is formed, between the first electrically conductive layer 21B and the second electrically conductive layer 22B, an area (pressure sensitive area) Z where the pressure sensitive layers 23 are compressed. Here, the first electrode 21A is disposed at a position disposed relatively on the side of the center of the panel member 4 (to the right side in Fig. 6) from the pressure sensitive area Z (a position not overlapped with the pressure sensitive area Z). That is, on the first substrate 21 side of the pressure sensitive area Z, the first electrically conductive layer 21B alone is present, so that the possibility of the surface of this first electrically conductive layer 21B being flat and smooth may be higher. As a result, when the pressure detection unit 20 is pressed, the contact state between the first electrically conductive layer 21B and the pressure sensitive ink layer 23a in the pressure sensitive area Z is improved, so that the pressure detection characteristics may be stable.

As the material for forming the first electrically conductive layer 21B and the second electrically conductive layer 22B of the pressure detection unit 20, a substantially same or similar material as/to the material forming the first electrode 21A and the second electrode 22B may be employed. In the case of employing the electrically conductive paste, it is preferred that the paste have particle size smaller than that of the material forming the first electrode 21A and the second electrode 22A. With use of such material having smaller particle size for forming the electrically conductive layers, flat and smooth electrically conductive layers can be readily formed. Of the above-cited kinds of material, as the carbon particles, materials having various particle sizes are available. Therefore, by mixing carbon particles of smaller size in the binder and applying the resultant mixture, it is possible to obtain smooth and flat electrically conductive layers having fine surface characteristics.

### [Embodiment 3]

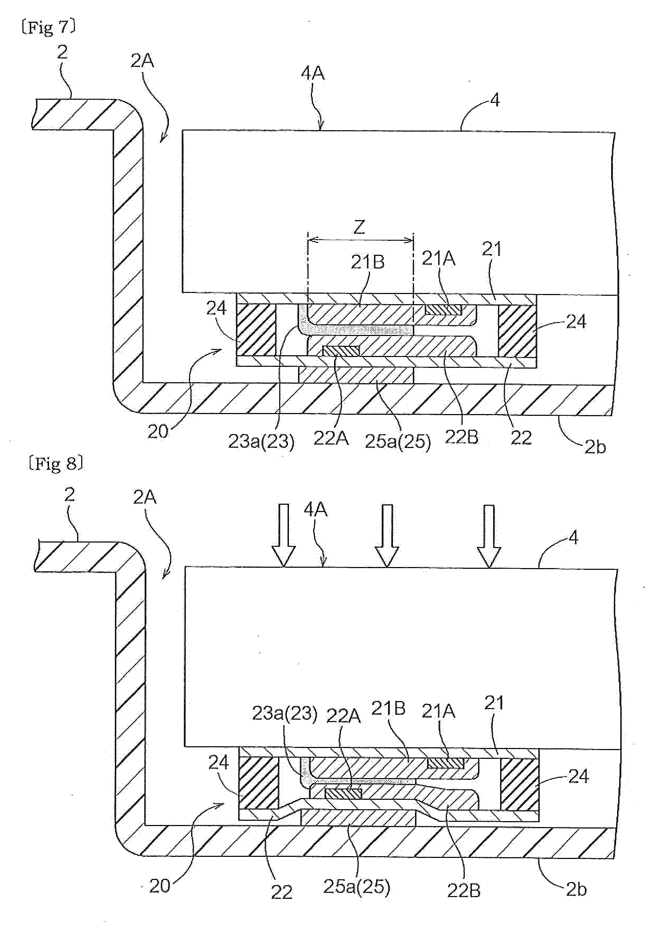

In the instant embodiment, as shown in Fig. 7, the pressure detection unit 20 is configured such that the first electrically conductive layer 21B is coated or covered with a pressure sensitive layer 23. The pressure sensitive area Z of the pressure sensitive layer 23 is located between the first electrically conductive layer 21B and the second electrically conductive layer 22B and the first electrode 21A is provided at a position offset from the pressure sensitive area Z in the direction along the first substrate 21. In the pressure detection unit 20, on the outer face of the second substrate 22, there is provided a bump 25a which contacts with the support portion 2b as a load transmission member 25 for applying a concentrated load to the pressure sensitive layer 23. The bump 25a is disposed to be overlapped with the pressure sensitive area Z, such that when a load is applied to the pressure detection unit 20 from the panel member 4, the bump 25a supports the pressure detection unit 20 from the lower side thereof, thereby to transmit this load in a concentrated manner to the pressure sensitive layer 23 (Fig. 8).

As some examples of possible configuration of the bump 25a, this can be formed by printing or applying an amount of thermosetting resin or UV setting resin and allowing it to be set, cutting a film or resin plate to a size matching the pressure detection unit and then affixing thereto, a foam member such as PE foam, urethane foam etc., or adhesive bonding agent or double-sided bonding member, a double-side bonding tape, etc. Incidentally, in case the pressure sensitive layer 23 is provided in the second electrically conductive layer 22B, the bump 25a will be provided on the back side of the first substrate 21 to contact the panel member 4. In this, the height dimension of the bump 25a will range from 50 *µ*m to 200 *µ*m for example (including the thickness of the bonding layer for bonding to the second substrate 22).

Instead of forming the bump 25a, a convex portion may be formed at the portion of the housing body 2 corresponding to the pressure sensitive area Z. With provision of such convex portion in the housing body 2 per se, this convex portion functions as the load transmission member 25.

### [Embodiment 4]

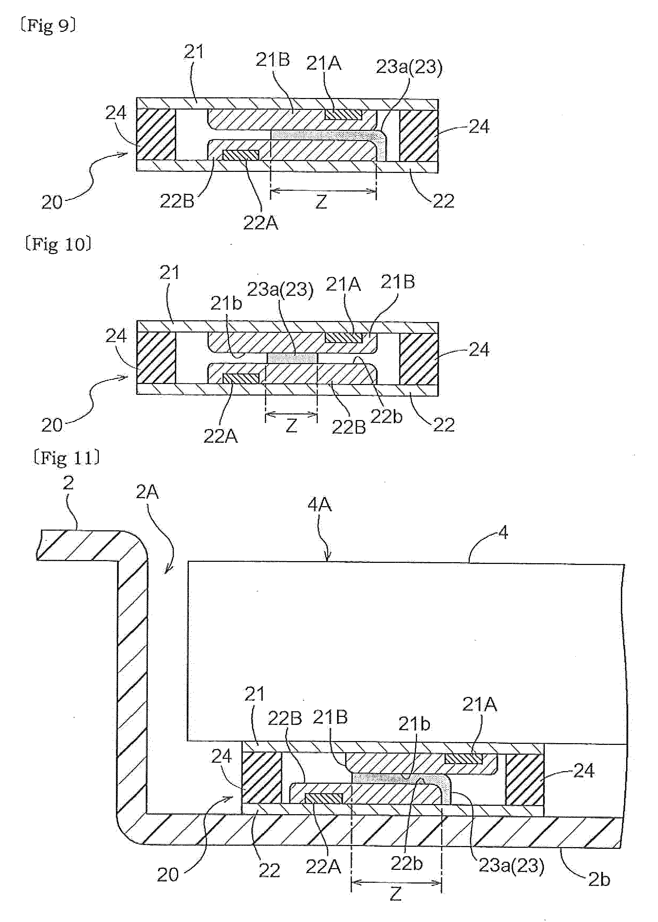

As shown in Fig. 9, the pressure detection unit 20 may be configured such that the second electrically conductive layer 22B is coated with the pressure sensitive layer 23, and in reverse arrangement to that in the foregoing embodiment, the second electrode 22A can be provided at a position not overlapped with the pressure sensitive area Z.

### [Embodiment 5]

In this embodiment, as shown in Fig. 10, the pressure detection unit 20 includes a first electrode 21A disposed relatively on the side of the center of the panel member 4, a second electrode 22A disposed relatively on the side of the counter-center side of the panel member 4. A first electrically conductive layer 21B coating the first electrode 21A includes a first extension portion 21b extending toward the counter-center side, a second electrically conductive layer 22B includes a second extension portion 22b extending toward the center side. The first electrically conductive layer 21B and the second electrically conductive layer 22B are disposed substantially parallel in the vertical direction, and a portion of the second extension portion 22b is coated with the pressure sensitive layer 23, and the pressure sensitive layer 23 is disposed between the first extension portion 21b and the second extension portion 22 to form the pressure sensitive area Z therein. As a result, in the pressure detection unit 20, the first electrode 21A and the second electrode 22A are provided at positions not overlapped with the pressure sensitive area Z.

By providing the first electrode 21A and the second electrode 22A at positions not overlapped with the pressure sensitive area Z as described above, it becomes possible to provide the component surfaces of the first electrically conductive layer 21B and the second electrically conductive layer 22B with smooth and flat finish. Hence, the contact between the pressure sensitive layer 23 and the first and second electrically conductive layer 21B, 22B becomes more reliable, so that there is obtained a pressure detection unit 20 having high reliability.

In particular, the pressure sensitive ink layer 23a coats only the second extension portion 22b in the second electrically conductive layer 22B. Therefore, even when the pressure sensitive layer 23 is compressed, the second electrode 22A is not pressed directly. Hence, the second electrode 22A is less vulnerable to damage in the case of excessive press operation on the panel member, so that the durability of the pressure detection unit 20 is improved.

### [Embodiment 6]

In this embodiment, as shown in Fig. 11, the pressure detection unit 20 includes a first electrode 21A disposed relatively on the side of the center of the panel member 4, a second electrode 22A disposed relatively on the counter-center side of the panel member 4. A first electrically conductive layer 21B coating the first electrode 21A includes a first extension portion 21b extending toward the counter-center side and the second electrically conductive layer 22B includes a second extension portion 22b extending toward the center side. In the above, the first electrically conductive layer 21B and the second electrically conductive layer 22B are disposed such that only the respective extension portions 21b, 22b thereof are overlapped with each other, and a portion of the second extension portion 22b is coated with the pressure sensitive layer 23, and the pressure sensitive layer 23 is provided between the first extension portion 21b and the second extension portion 22b to form the pressure sensitive area Z therein. Hence, both electrodes 21A, 22A are provided at positions not overlapped with the pressure sensitive area Z.

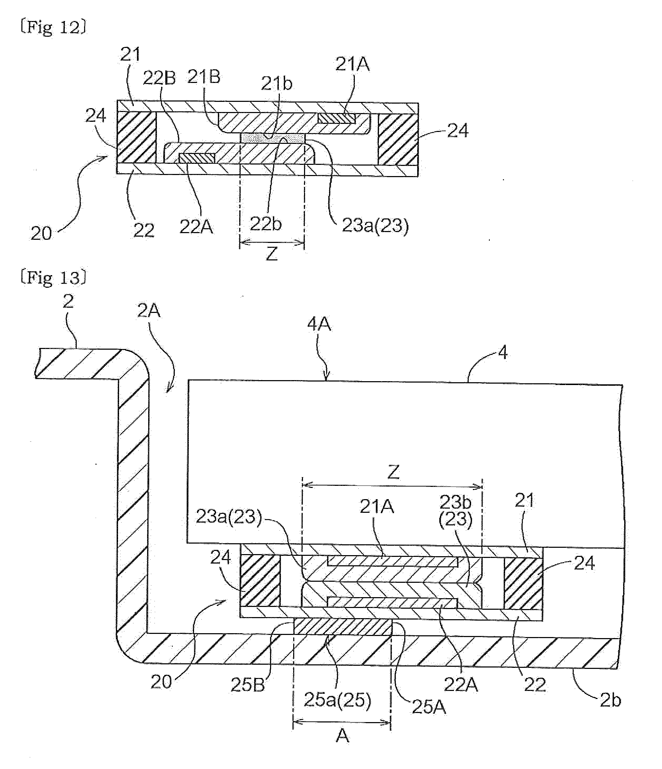

With the above-described arrangement of the pressure detection unit 20, at the position where the first electrode 21A is located on the normal line relative to the second substrate 22, the second electrically conductive layer 22B is not present. And, at the position where the second electrode 22A is located on the normal line relative to the first substrate 21, the first electrically conductive layer 21B is not present. Therefore, as contacts between the first electrode 21A and the second electrically conductive layer 22B and between the second electrode 22A and the first electrically conductive layer 21B are avoided reliably. As a result, the detection accuracy of the pressure detection unit 20 is improved.
Further, as shown in Fig. 12, with the arrangement of the pressure sensitive layers 23 being not disposed on either the opposing face of the first electrode 21A or the opposing face of the second electrode 22A, contacts between the first electrode 21A and the second electrically conductive layer 22B and between the second electrode 22A and the first electrically conductive layer 21B are avoided even more reliably.

### [Embodiment 7]

Referring to the pressure detection unit 20, as shown in Fig. 13, on the side of the panel member 4, a frame-like first substrate 21 is disposed and on the side of the support portion 2b, there is disposed a frame-like second substrate 22 facing the first substrate 21. On the first substrate 21, a first electrode 21A is disposed and on the second substrate 22, a second electrode 22A is disposed. The first electrode 21A is coated or covered with an upper pressure sensitive ink layer 23a and the second electrode 22A is coated or covered with a lower pressure sensitive ink layer 23b. The electrodes 21A, 22A may be coated with the electrically conductive layers 21B, 22B, respectively. Further, the pressure sensitive layers 23 may be a single layer of pressure sensitive ink.

As shown in Fig. 13, on the face of the first substrate 21 facing the second substrate 22, a first electrode 21A is disposed in the form of a frame. On the face of the second substrate 22 facing the first substrate 21, there is disposed a second electrode 22A facing the first electrode 21A. In the corner portions or peripheral portions of the first substrate 21, there are disposed upper pressure sensitive ink layers 23a in the form of dots covering the first electrode 21A. In the corner portions or peripheral portions of the second substrate 22, there are disposed lower pressure sensitive ink layers 23b in the form of dots covering the second electrode 22A and facing the upper pressure sensitive ink layers 23a. The electrodes at the pressure sensitive ink layer portions are sized to be slightly smaller than the printing sizes of the pressure sensitive ink layers and are attached to the opening 2A as being affixed thereto.

The pressure sensitive unit 20 further includes a bump 25a between the second substrate 22 and a support portion 2b of the housing body, the bump acting as a load transmission member 25 which contacts the support portion 2b to apply a concentrated load to the pressure sensitive layer 23. When the panel member 4 is pressed, the first electrode 21A and the second electrode 22A compress the pressure sensitive layers 23, thus forming a pressure sensitive area Z. The bump 25a forms a load transmission area A between the second substrate 22 and the support portion 2b of the housing body. Here, as seen along the direction of the normal line of the panel member 4, relative to the pressure sensitive area Z, of the edge of the bump 25a, an edge portion 25A on the side of the center of the panel member 4 is overlapped therewith, whereas an edge portion 25B on the counter-center side of the panel member 4 is not overlapped with the same. That is, the load transmission member 25 is configured such that a portion of the edge thereof is overlapped with the pressure sensitive area Z and the other edge portion thereof is not overlapped with the pressure sensitive area Z, as seen along the direction of the normal line of the panel member 4.

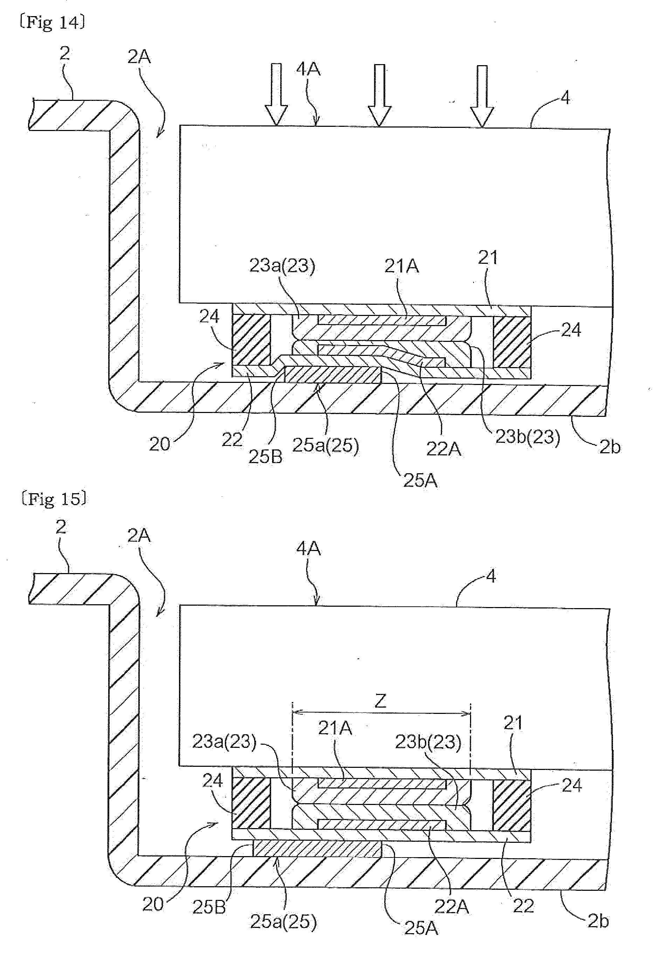

When a load is applied from the panel member 4 to the pressure detection unit 20, the bump 25a supports the pressure detection unit 20 from the lower side thereof, thus transmitting this load in a concentrated manner to the pressure sensitive unit 20 (Fig. 14). Further, as the edge portion 25A on the center side of the panel member 4 acts as a "corner portion", a local press force is applied to the second substrate 22. With this, the pressure detection unit 20 can detect even a small press force in a reliable manner.

As some examples of possible configuration of the bump 25a, this can be formed by printing or applying an amount of thermosetting resin or UV setting resin and allowing it to be set, cutting a film or resin plate to a size matching the pressure detection unit and then affixing thereto, a foam member such as PE foam, urethane foam etc., or adhesive bonding agent or double-sided bonding member, a double-aide bonding tape, etc. The bump 25a may be provided either between the first substrate 21 and the panel member 4 alone or may be provided between the first substrate 21 and the panel member 4 as well as between the second substrate 22 and the support portion 2b of the housing body. In this, the height dimension of the bump 25a will range from 50 µm to 200 µm for example (including the thickness of the bonding layer for bonding to the second substrate 22).

Instead of forming the bump 25a, a convex portion may be formed at the portion of the housing body 2 corresponding to the pressure sensitive area Z. With provision of such convex portion in the housing body 2 per se, this convex portion functions as the load transmission member 25.

### [Embodiment 8]

In the case of the configuration of the pressure detection unit 20 wherein the first substrate 21 and the second substrate 22 are connected to each other via a connecting portion 24 at position different from the pressure sensitive area Z, when the first substrate 21 and the second substrate 22 are pressed against each other in association with application of a press force to the panel member 4, the connecting portion functions like a "knot", which makes it difficult for the first substrate and the second substrate to approach each other.

Then, in the case of the pressure detection unit 20 according to this embodiment, as shown in Fig. 15, as seen along the direction of the normal line of the panel member 4, a portion 25A of the edge of the load transmission member 25 is overlapped with the pressure sensitive area Z, and the other edge portion 25B is overlapped with the connecting portion 24.

When the first substrate 21 and the second substrate 22 approach each other and are deformed when the panel member 4 is pressed, at the portion of the connecting portion 24, the amount of change in the distance between the first substrate 21 and the second substrate 22 is smaller than e.g. the amount of change in the pressure sensitive area Z. Then, when the panel member 4 is deformed as receiving a press force, a greater load will be applied to a portion where mutual approaching between the first substrate 21 and the second substrate 22 is easier, that is, at a portion corresponding to the pressure sensitive area Z.

There is no necessity of extending the load transmission member 25 from the position of the contacting portion 24 toward the side of the pressure sensitive area Z and extending it even further. By avoiding excessive extension of the load transmission member 25, there will be no component that would restrict the first substrate 21 or the second substrate 22, so that there is obtained greater freedom in the deformation at this portion. As a result, it becomes possible for the first substrate 21 or the like to be bent or flexed even more greatly, thus increasing the press-in amount of the pressure sensitive area Z by the portion of the edge 25A of the load transmission member 25.

### [Embodiment 9]

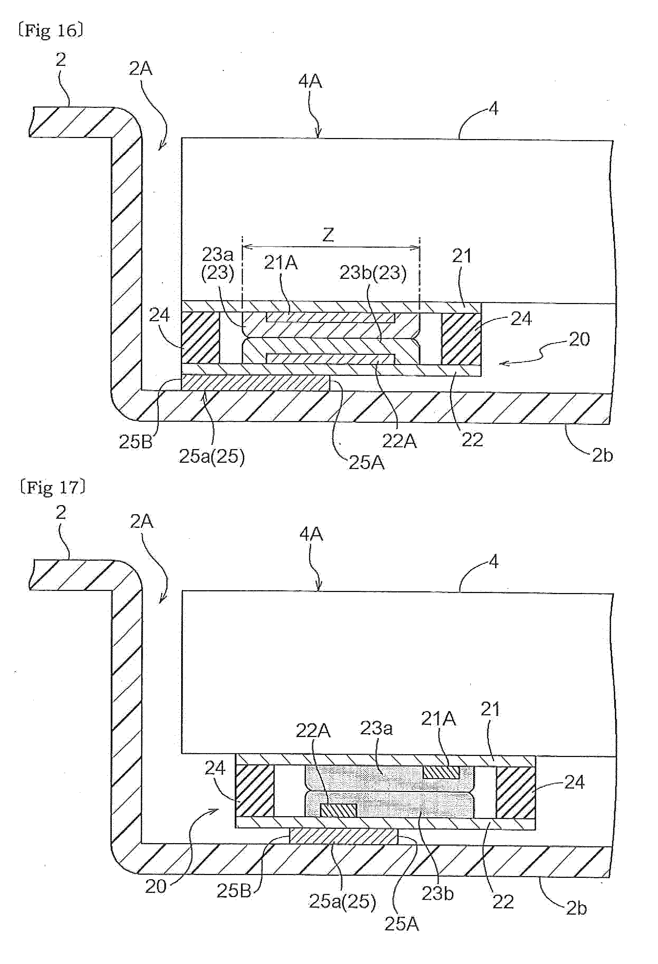

In this embodiment, as shown in Fig. 16, as seen along the direction of normal line of the panel member 4, a portion of the edge 25A of the load transmission member 25 is overlapped with the pressure sensitive area Z and a portion of the other edge 25B is located on the outer edge side of the panel member 4 relative to the pressure sensitive area Z; and at the outer edge of the panel member 4, the edge of the first substrate 21, the connecting portion 24, the edge of the second substrate 22 and a potion of the rest edge 25B of the load transmission member 25 are overlapped with each other. The area from the edge of the first substrate 21 to the edge 25B of the load transmission member 25 is disposed on the outermost side of the panel member 4.

With this, this portion, the outer edge of the panel member 4, functions as a "reaction force receiving portion" when a press force is applied to the panel member 4. Then, the panel member 4 will be flexed and deformed with the center portion thereof being pushed in relative to this edge portion as the pivot thereof. With the provision of such reaction force receiving portion in the outermost edge of the panel member 4 and resultant increase of the distance from the center position of the panel member 4, it becomes possible to cause the panel member 4 to be deformed maximally in response to application of a same amount of press force.

On the other hand, of the load transmission member 25, the edge 25A thereof is located at the position in the pressure sensitive area Z, so that this edge portion 25A will press the pressure sensitive area Z in a concentrated manner. In this, since the arrangement is provided for allowing maximal flexing deformation of the panel member 4 as described above, the amount of pressing to the pressure sensitive layers 23 will be increased and the detection sensitivity of the pressure detection unit 20 will be improved.

Incidentally, in case the connecting portion from the edge of the first substrate 21 to the load transmission member 25 is disposed on the outermost side of the panel member 4 and the load transmission member 25 is constituted of an adhesive member and this adhesive member is provided along the entire periphery of the panel member 4, it is possible to prevent intrusion of foreign substance or water from the outer peripheral side of the panel member 4.

### [Embodiment 10]

In this embodiment, as shown in Fig. 17, in the pressure detection unit 20, on the first substrate 21, the first electrode 21A is disposed relatively on the side of the inner side of the panel member 4 and on the second substrate 22, the second electrode 22A is disposed relatively on the side of the outer side of the panel member 4. More particularly, the first electrode 21A and the second electrode 22A are disposed at positions not facing each other on the normal lines of the first substrate 21 and the second substrate 22. The first electrode 21A is coated or covered with an upper pressure sensitive ink layer 23a as a pressure sensitive layer 23 and the second electrode is coated or covered with a lower pressure sensitive ink layer 23b as another pressure sensitive layer 23.

That is, the first electrode 21A and the second electrode 22A are disposed at positions not facing each other on the normal lines of the first substrate 21 and the second substrate 22. With this, it is possible to alleviate the influence from unevenness in the thickness or surface of the electrode portions 21A, 22A which may affect the pressure sensitive layers 23. When the first electrode 21A is pressed against the pressure sensitive layer 23, the second electrode 22A does not hinder the pressing of the first electrode 21A. Further, conversely, when the second electrode 22A is pressed against the pressure sensitive layer 23, the first electrode 21A does not hinder the pressing of the second electrode 22A. As a result, there can be obtained a pressure detection unit 20 having improved contact conditions between the pressure sensitive layers 23 and the first and second electrodes 21A, 22A. Further, when the pressure detection unit 20 is pressed, there occurs no direct mutual pressing between the first electrode 21A and the second electrode 22A. Therefore, it is possible to restrict occurrence of frictional wear of the electrodes which could occur with repeated mutual pressing between the electrodes, so that the durability of the pressure detection unit 20 is improved. Incidentally, the first electrode 21A may be disposed on the counter-center side of the panel member 4 on the first substrate 21 and the second electrode 22A may be disposed on the center side of the panel member 4 on the second substrate 22.

### [Embodiment 11]

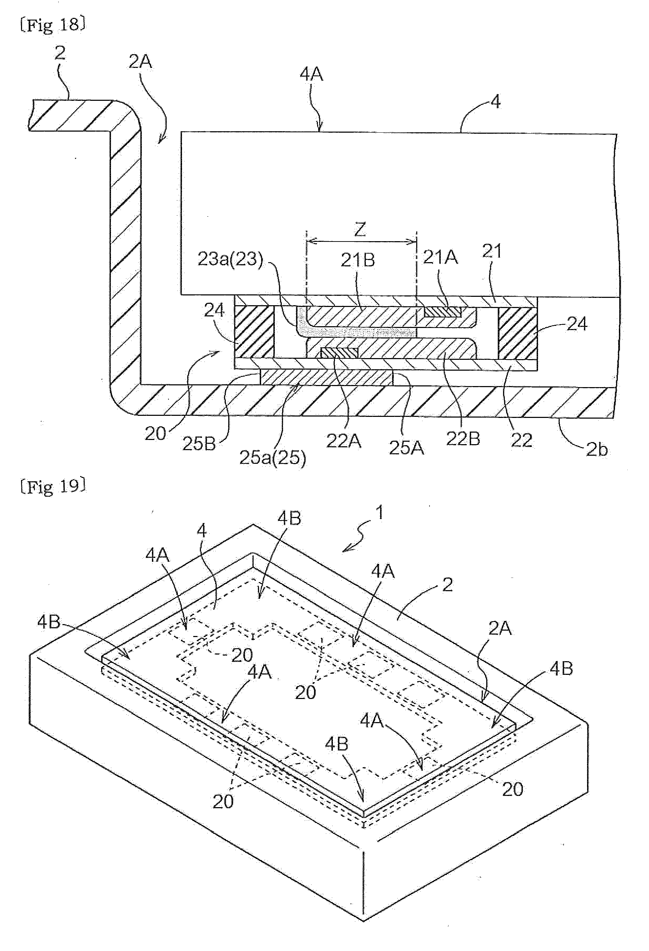

As shown in Fig. 18, in the pressure detection unit 20, on the first substrate 21, the first electrode 21A is disposed on the inner side of the panel member 4 and the first electrode 21A is coated with the first electrically conductive layer 21B. On the other hand, on the second substrate 22, the second electrode 22A is disposed on the outer side of the panel member 4 and the second electrode 22A is coated with the second electrically conductive layer 22B. That is, in this embodiment too, the first electrode 21A and the second electrode 22A are provided at positions not facing each other on the normal lines of the first substrate 21 and the second substrate 22. Further, the first electrically conductive layer 21B is coated with a pressure sensitive ink layer 23a as a pressure sensitive layer 23.

The surface of the pressure sensitive ink layer 23a coating the first electrically conductive layer 21B faces the second electrically conductive layer 22B. Hence, when the panel member 4 is pressed, between the first electrically conductive layer 21B and the second electrically conductive layer 22B, there is formed a pressure sensitive area Z where the pressure sensitive layer 23 is compressed. Here, the first electrode 21A is disposed at position offset from the pressure sensitive area Z toward the center side of the panel member 4 (the right side in Fig. 18). That is, the first electrode 21A is provided at a position not overlapped with the pressure sensitive area Z. Hence, on the first substrate 21 side of the pressure sensitive area Z, the first electrically conductive layer 21B alone is present. Thus, it is possible to eliminate influence of unevenness in the thickness or surface of the first electrode 21A in the pressure sensitive area Z. Thus, the possibility of the surface of the first electrically conductive layer 21B being formed flat and smooth is increased. As a result, when the panel member 4 is pressed, in the pressure sensitive area Z, the contact condition between the first electrically conductive layer 21B and the pressure sensitive ink layer 23a is improved and the pressure detection characteristics becomes stable. Incidentally, the first electrode 21A may be disposed on the counter-center side of the panel member 4 on the first substrate 21 and the second electrode 22A may be disposed on the center side of the panel member 4 on the second substrate 22.

### [Other Embodiments]

(1) In the information input device 1, when the panel member 4 whose peripheral portion 4A is fixed is pressed, the peripheral portion 4A tends to float due to flexure of the panel member 4. This floating action can cause reduction in the accuracy of the pressure detection unit 20 disposed in the peripheral portion 4A. Then, the information input device 1 shown in Fig. 19 includes a floating prevention mechanism for preventing floating of a corner portion 4B of the panel member 4 off the housing body 2. Three pressure detection units 20 are provided on the long side of the peripheral portion 4A of the rectangular panel member 4 and one pressure detection unit 20 is provided on the short side thereof, excluding the corner portion 4b, However, the disposing layout and the disposing number of the pressure detection units 20 are not limited to the above. For instance, the pressure detection unit 20 may be provided in the corner portion 4B. Incidentally, the term "corner portion 4B" refers to a predetermined area from the corner of the panel member 4. For example, this can be the area of 1/4 distance of the straight distance connecting between the center of the panel member 4 and the pressure detection unit 20 disposed closest to this center.

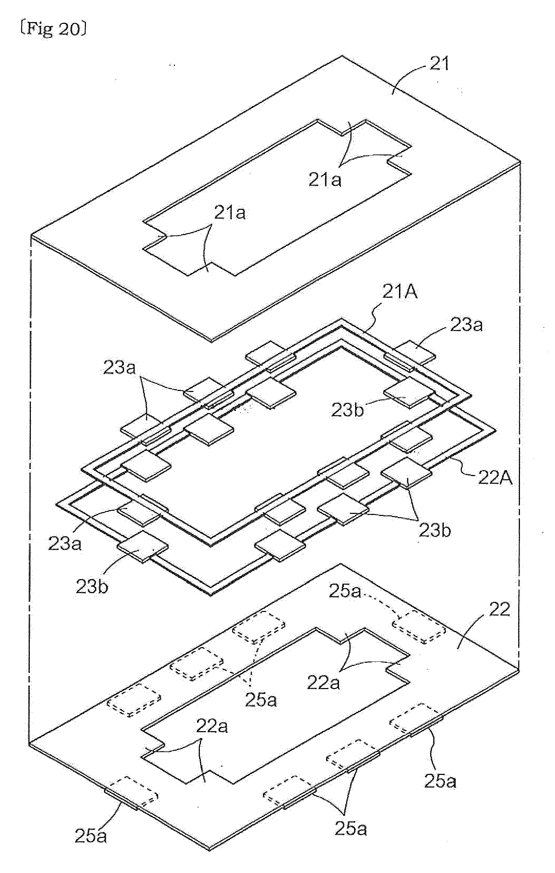

As shown in Fig. 20, downwardly of the panel member 4, in the order from the top side thereof, there are disposed the first substrate 21, the first electrode 21A, the upper pressure sensitive ink layer 23a, the lower pressure sensitive ink layer 23b, the second electrode 22A, the second substrate 22 and the bump 25a. On the lower face of the frame-like first substrate 21, there is disposed the first electrode 21A in the form of a frame and on the upper face of the frame-like second substrate 22, there is disposed the second electrode 22A in the form of a frame.

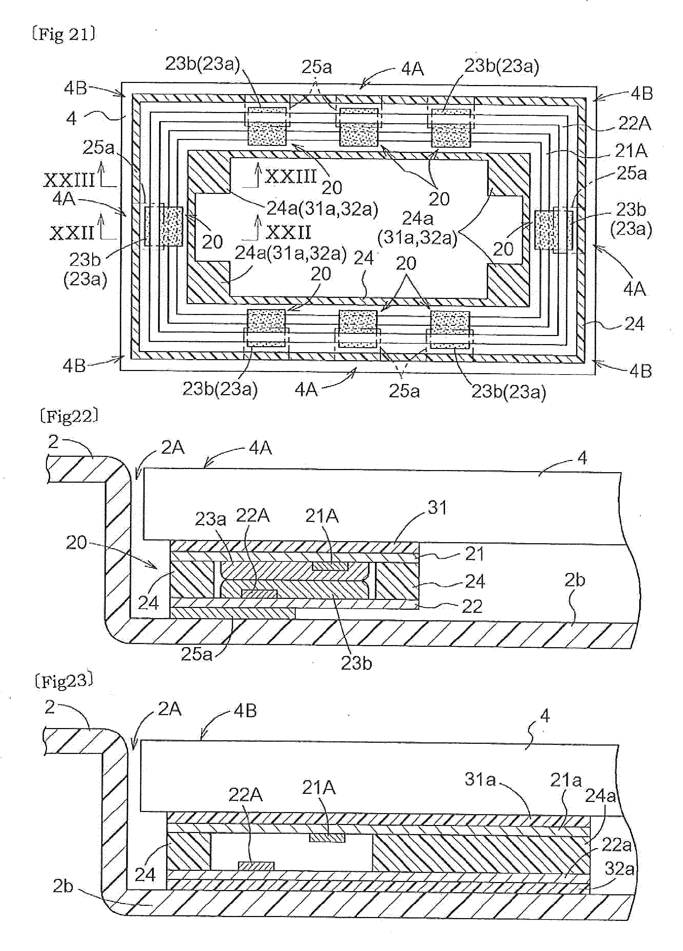

Fig. 21 is a plane view showing the arrangement of the floating prevention mechanism. In the instant embodiment, from the four corners inside the frames of the first substrate 21 and the second substrate 22, there are respectively provided projections 21a, 22a projecting toward the inner sides (see Fig. 20). The floating prevention mechanism in this embodiment is constituted by providing the projection 21a of the first substrate 21 and the projection 22a of the second substrate 22 with a wide bonding member 24a, a wide upper bonding portion 31a and a wide lower bending portion 32a. Incidentally, the areas of the first substrate 21 and the second substrate 22 covering the wide upper bonding member 31a and the wide lower bonding portion 32a need not be constituted as the projections 21a, 22a. Instead, these may be constituted of portions of the first substrate 21 and second substrate 22 in the form of frames with a predetermined width, not having the projections 21a, 22a.

Fig. 22 is a section along XXII-XXII in Fig. 21, that is, a section of the peripheral portion 4A where the pressure detection unit 20 is formed. In the pressure detection unit 20, the lower face of the panel member 4 and the upper face of the first substrate 21 are bonded to each other via an upper bonding portion 31 and the upper face of the support portion 2b of the housing body 2 and the lower face of the second substrate 22 are bonded via a bump 25a comprising a double-sided adhesive tape. As the upper bonding portion 31 and the lower bonding portion 32 to be described later, adhesive agent such as paste, a double-sided adhesive tape, etc. can be employed.

Fig. 23 is a section along XXIII-XXIII in Fig. 21, that is, a section of the corner portion 4B where the pressure detection unit 20 is not formed. In the corner portion 4B, there are provided projections 21a, 22a projecting from the inner frame of the first substrate 21 and the second substrate 22 toward the inner side. With provision of such projections 21a, 22a, a wide bonding member 24a, a wide upper bonding portion 31a and a wide lower bonding portion 32a can be provided, so that the bonding area in the corner portion 4B can be larger. As a result, the bonding force in the corner portion 4B is increased and it becomes possible to prevent the floating of the panel member 4.

In the corner portion 4B, the pressure sensitive ink layers 23a, 23b are not provided, so that this portion does not function as the pressure detection unit 20. Therefore, even if the corner portion 4B of the panel member 4 should float, as no pressure is detected in this corner portion 4B, the detection accuracy of the pressure detection unit 20 can be improved.

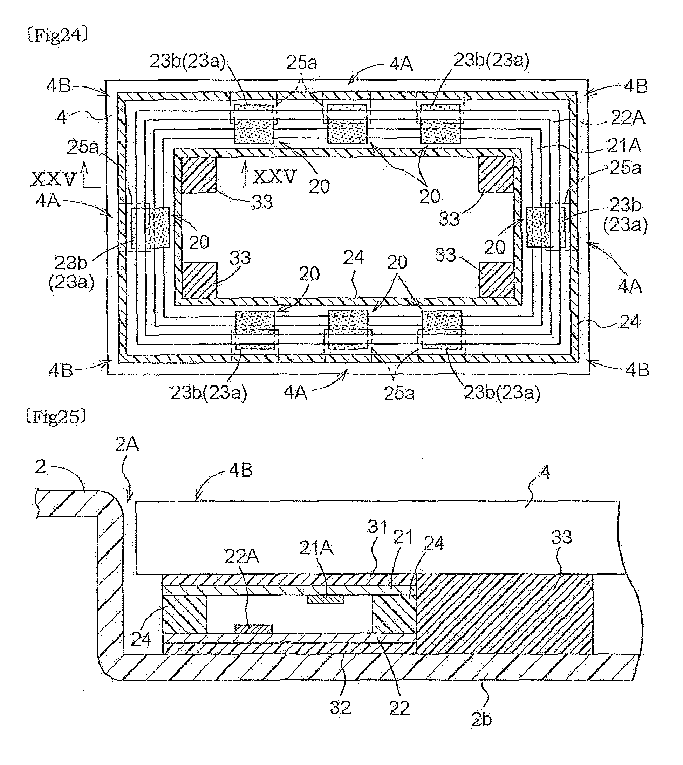

No projections may be provided in the first substrate 21 and the second substrate 22. In this case, as shown in Fig. 24 and Fig. 25, in the corner portion 4B of the panel member 4, in the area on the inner sides of the inner frames of the first substrate 21 and the second substrate 22, bonding portions 33 for directly bonding between the panel member 4 and the support portion 2b of the housing body 2 may be provided as the floating prevention mechanism.

With provision of the bonding portion 33, the bonding area in the corner portion 4B is increased, so that the floating of the corner portion 4B of the panel member 4 can be prevented. The bonding portion 33 can be e.g. an adhesive bonding agent or a double-sided adhesive member having elasticity. Incidentally, it is not absolutely needed for the bonding portion 33 to be in contact with the first substrate 21 and the second substrate 22. The bonding portion 33 and the fast and second substrate 21, 22 can be partially spaced from each other.

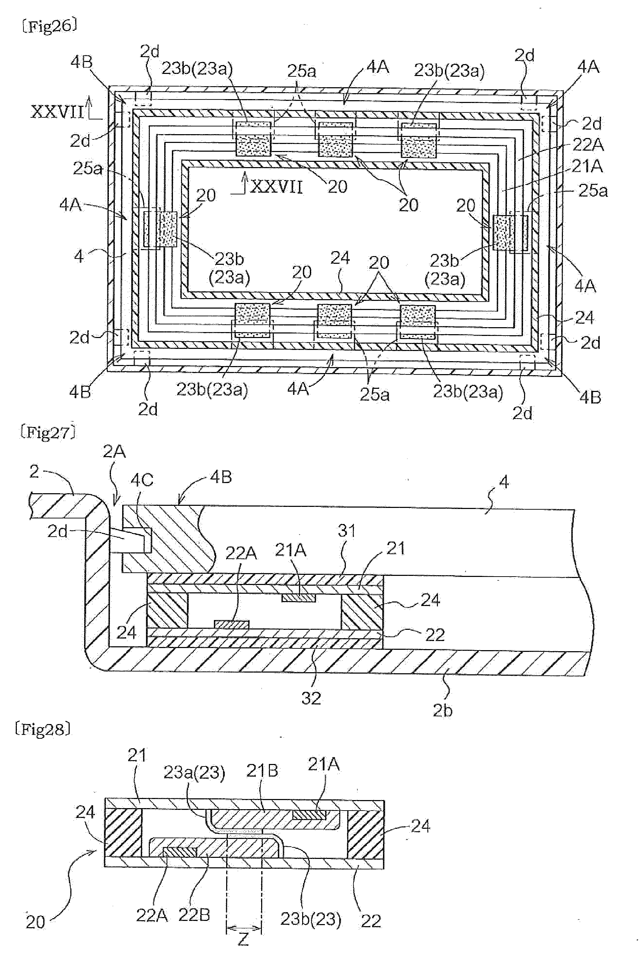

Further, as the floating prevention mechanism, as shown in Fig. 26 and Fig. 27, a concave portion 4C may be provided in a lateral face of the corner portion 4B of the panel member 4 and a convex portion 2d engageable with the concave portion 4C may be provided in the housing body 2. With this arrangement, as the convex portion 2d prevents floating of the corner portion 4B of the panel member 4, reduction in the detection accuracy of the pressure detection unit 20 due to the floating phenomenon can be prevented. Incidentally, the convex portion 2d can be replaced by a concave portion and the concave portion 4C can be replaced by a convex portion.

(2) In the pressure detection unit 20 relating to the present invention, an initial load may be applied in advance to the pressure sensitive layers 23.
The connecting portion 24 is comprised of a non-elastic spacer (including the bonding layers to the substrates 21, 22, this can be an adhesive bonding agent alone) whose thickness is smaller than the thickness of the pressure sensitive portion (electrodes, electrically conductive layers, and pressure sensitive layers). With this, in case deformation of the first substrate 21 or the second substrate 22 is allowed, the first substrate 21 or the second substrate 22 applies a preset pressure as an initial load to the pressure detection unit 20. The connecting portion 24 can be an adhesive bonding agent or double-sided bonding member having elasticity or various kinds of elastic members such as rubber, a tension coil spring, a plate spring in a condition for exerting a tensile force.

In case it is not possible to render the thickness of the connecting portion 24 smaller than the thickness of the pressure sensitive portion, due to the material forming this connecting portion 24, conversely, the thickness of the pressure sensitive portion may be increased to be greater than the thickness of the connecting portion 24, thereby to apply an initial load to the pressure sensitive layers 23. Incidentally, for increasing the thickness of the pressure sensitive portion, this may be realized for instance by printing or applying the electrode 21A, 22A, the electrically conductive layer 22A or 22B or the pressure sensitive layer 23 in a thickness greater than the normal thickness or recoating the same.

With the above-described arrangements of the connecting portion 24 of the pressure detection unit 20, under the condition when the pressure detection unit 20 is disposed between the panel member 4 and the support portion 2b of the information input device 1, a force is applied to the connecting portion 24 which force tends to retain the original thickness. And, this force acts in the direction for bringing the first substrate 21 sand the second substrate 22 closer to each other. That is, by decreasing the distance between the first substrate 21 and the second substrate 22, thereby to reduce the thickness of the pressure sensitive layer 23 under the non-pressed state thereof, a preset pressure as an initial load is applied to the pressure sensitive layer 23.

(3) In the pressure detection unit 20, as shown n Fig. 28, the first electrically conductive layer 21B may be coated with the upper pressure sensitive ink layer 23a and the second electrically conductive layer 22B may be coated with the lower pressure sensitive ink layer 23b, and the first electrode 21A and the second electrode 22A are provided at positions not overlapped with the pressure sensitive area Z.

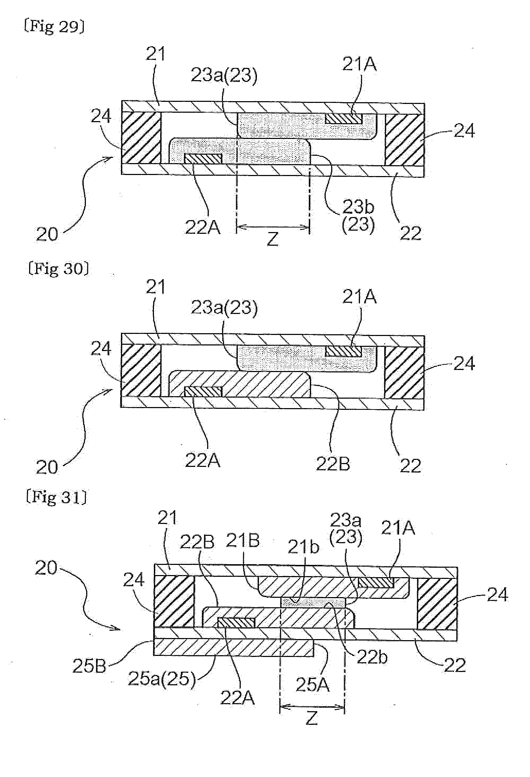

(4) The pressure detection unit 20, as shown in Fig. 29, may be configured such that the first electrode 21A and the second electrode 22A are not coated with the electrically conductive layers 21B, 22B, but are coated directly with the upper pressure sensitive ink layer 23a and the lower pressure sensitive ink layer 23b, and the first electrode 21A and the second electrode 22A are provided at positions not overlapped with the pressure sensitive area Z:

(5) The pressure detection unit 20 may be configured such that either one of the first electrode 21A and the second electrode 22A (the second electrode 22A in the case of the illustration in Fig. 30) is coated with an electrically conductive layer (the second electrically conductive layer 22B in the case of the illustration in Fig. 30) and either the other of the first electrode 21A and the second electrode 22A (the first electrode 21A in the case of the illustration in Fig. 30) is coated directly with the pressure sensitive layer 23.

(6) In the foregoing embodiments, in the pressure detection units 20 of some of the embodiments alone, the bump 25a overlapped with the pressure sensitive area Z was provide. However, in the pressure detection units 20 of the other embodiments too, the pump 25a may be provided to be overlapped with the pressure sensitive area Z.

(7) As shown in Fig. 31, the load transmission member 25 provided in the pressure detection unit 20 may be disposed such that one edge 25A thereof is overlapped with the pressure sensitive area Z and the other edge 25B thereof is not overlapped with the pressure sensitive area Z. The other edge 25B may be disposed on the counter-center side of the panel member 4 relative to the pressure sensitive area Z or conversely this may be on the center side of the panel member 4 relative to the pressure sensitive area Z. In case the bump 25a is formed of an adhesive material, as shown in Fig. 31, by disposing the area from the edge of the first substrate 21 to the edge 25B of the load transmission member 25 on the outermost side of the panel member 4, it is possible to prevent intrusion of foreign substance or water from the outer peripheral side of the panel member 4. Hence, the reliability and durability of the device can be improved. Further, since unnecessary edge portions of the pressure detection unit 20 and the load transmission member 25 can be eliminated, the pressure detection unit 20 can be manufactured easily.

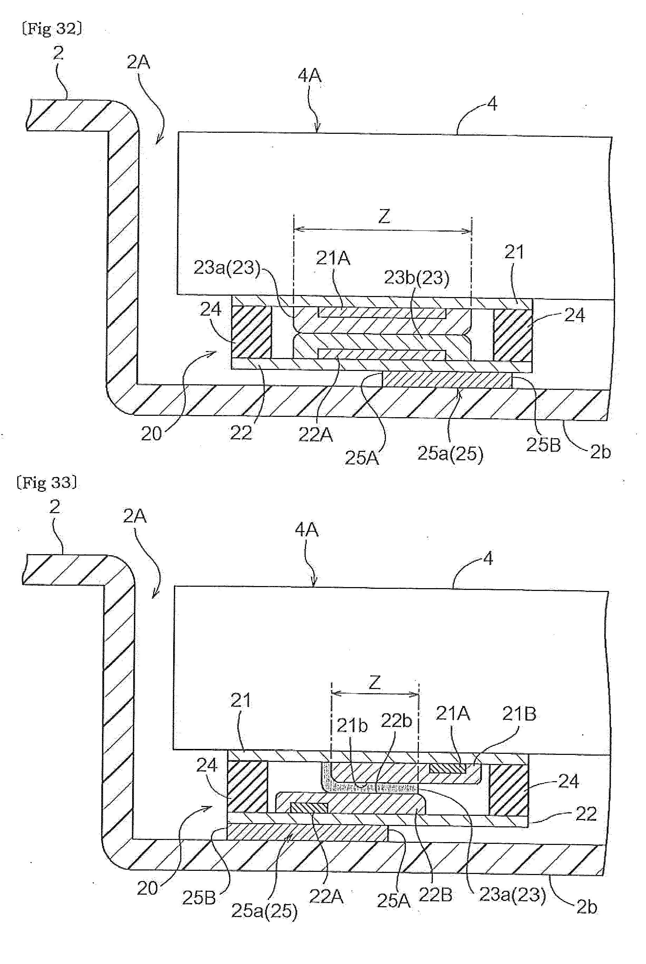

(8) As shown in Fig. 32, the load transmission member 25 may be configured such that as seen in the direction of the normal line of the panel member 4, the counter-center side edge of the panel member 4 is overlapped with the pressure sensitive area Z and the center side edge of the panel member 4 is not overlapped with the pressure sensitive area Z.

(9) In Embodiment 11 described above, the first electrode 21A was provided at a position not overlapped with the pressure sensitive area Z. Instead, the second electrode 22A may be provided at a position not overlapped with the pressure sensitive area Z. Or, both the first electrode 21A and the second electrode 22A may be provided at positions not overlapped with the pressure sensitive area Z. In case both the first electrode 21A and the second electrode 22A are provided at positions not overlapped with the pressure sensitive area Z, the first electrically conductive layer 21B will include a first extension portion 21b extending laterally relative to the first electrode 21A and the second electrically conductive layer 22B will include a second extension portion 22b extending laterally relative to the second electrode 22A.

If the upper pressure sensitive ink layer 23a coats only the first extension portion 21b of the first electrically conductive layer 21B and the pressure sensitive layer 23 is disposed between the first extension portion21b and the second extension portion 22b, in the course of a press operation to the panel member 4, the pressure sensitive layer 23 will be compressed by the first extension portion 21b and the second extension portion 22b. That is, even when the pressure sensitive layer 23 is compressed, the first electrode 21A and the second electrode 22A are not directly pressed. Hence, with the above arrangement, the first electrode 21A and the second electrode 22A will be less vulnerable to damage to an excessive press operation to the panel member 4, so that the durability of the pressure detection unit 20 can be improved.

(10) The pressure detection unit 20 having the bump 25a can be configured such that a pair of electrodes provided in either the first substrate 21 or the second substrate 22, and the other one of the first substrate 21 and the second substrate 22 is disposed to coat the pair of electrodes. With this, the electrode layer becomes a single layer, so that the thickness of the pressure detection unit 20 is further reduced. As a result, the information input device 1 can be formed thinner. In this case, if the pair of electrodes are provided in the form of comb teeth or coils, or the like for controlling the area of contact with the pressure sensitive ink members, it is possible to obtain signals in favorable detection range.

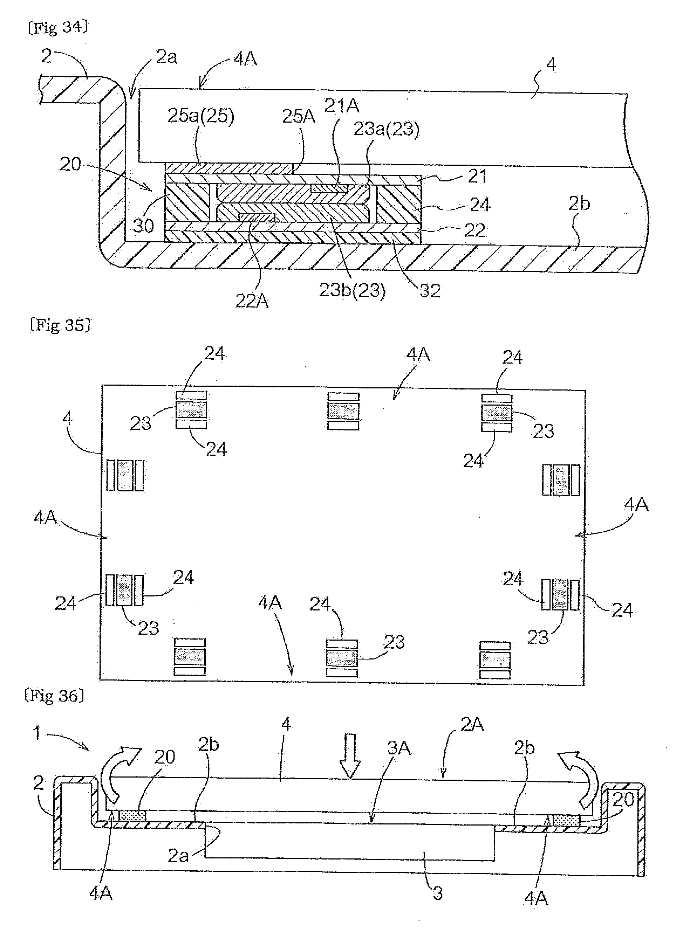

(11) A pressure detection unit 20 shown in Fig. 34 is identical to the pressure detection unit 20 shown in Fig. 22 except that a bump member 25 is disposed between the panel member 4 and the first substrate 21. If an arrangement is made such that of the edges of the bump 25a, the edge 25A on the center side of the panel member 4 is located between the first electrode 21A and the second electrode 22A, when the panel member 4 is pressed, the press force will be transmitted in a concentrated manner from the edge 25A of the bump 25a to the upper pressure sensitive ink layer 23a and the lower pressure sensitive ink layer 23b. Therefore, such arrangement is preferred.

(12) In the foregoing embodiment, the bump 25a was provided on the outer half of the pressure detection unit 20. Instead, a bump 25a having a smaller width than the pressure sensitive ink layer 24a, 24b may be provided downwardly of the pressure sensitive ink layer 23a, 23b. Further, the bump 25a may be disposed between the second substrate 22 and the lower pressure sensitive ink layer 23b or between the first substrate 21 and the upper pressure sensitive ink layer 23a. Further alternatively, the dumps 25a may be provided at plural positions of these.

(13) The connecting portion 24 of the pressure detection unit 20 may be provided only on one side of either the counter-center side or the center side of the panel member 4. In particular, if the connecting portion 24 is disposed on the counter-acenter side (outer side) of the panel member 4, it is possible to prevent intrusion of foreign substance or water through the gap between the panel member 4 and the device main body. Hence, there is no possibility of foreign substance getting stuck between the panel member 4 and the support portion 2b. Further, the chance of damage to the first electrode 21A, the second electrode 22A or the pressure sensitive layer 23 can be reduced. So that the durability of the device will be improved significantly.

(14) In the pressure detection unit 20 in the foregoing embodiment, the first electrode 21A is disposed on the center side of the panel member 4 and the second electrode 22A is disposed on the counter-center side of the panel member 4. Conversely, the first electrode 21A may be disposed on the counter-center side of the panel member 4 and the second electrode 22A may be disposed on the center side of the panel member 4.

(15) The pressure sensitive layer 23 may be provided on at least a part of the peripheral portion 4A of the panel member 4. The connecting portion 24 may be provided only in the vicinity of the pressure sensitive layer 23. If the connecting portion 24 is provided on a part of the peripheral portion 4A of the panel member 4 as described above, the connecting portion 24 can be provided only at position where it is needed. Hence, when e.g. the number of pressure detection units 20 to be disposed in the panel member 4 is small, the above-mentioned configurations will be advantageous in the manufacture of the information input device 1.

### Industrial Applicability

The pressure detection unit relating to the present invention may be effectively used in various electronic devices or instruments such as a mobile telephone, a smart phone, a PDA, a car navigation device, a digital camera, a digital video camera, a game machine, a tablet, etc., and can be utilized for realization of multiple functions and improvement of the operability of the electronic device or instrument.

## Claims

1. A pressure detection unit disposed in a peripheral portion of a panel member of an information input device in order to detect a press operation to the panel member, the pressure detection unit comprising:
a first substrate;
a second substrate disposed to face the first substrate;
pressure sensitive layers disposed between the first substrate and the second substrate; and
a first electrode provided on the first substrate and a second electrode provided on the second substrate for detecting resistance change via the pressure sensitive layers, respectively;
wherein the first electrode and the second electrode are provided at positions not facing each other on normal lines of the first substrate and the second substrate.

2. The pressure detection unit according to clam 1, wherein at least one of the first electrode and the second electrode is provided at a position not overlapped with a pressure sensitive area where the pressure sensitive layers are compressed when the pressure detection unit is pressed.

3. The pressure detection unit according to claim 2, wherein the first electrode and the second electrode are provided at positions not overlapped with the pressure sensitive area.

4. The pressure detection unit according to any one of claims 1-3, wherein at least one of the first electrode and the second electrode is coated with an electrically conductive layer.

5. The pressure detection unit according to claim 1, further comprising:
a first electrically conductive layer coating the first electrode; and
a second electrically conductive layer coating the second electrode;
wherein the first electrically conductive layer includes a first extension portion extending laterally relative to the first electrode,
the second electrically conductive layer includes a second extension portion extending laterally relative to the second electrode;
the pressure sensitive layers coat at least one of the first extension portion and the second extension portion; and
when the pressure detection unit is pressed, the pressure sensitive layers are compressed only by the first electrically conductive layer relating to the first extension portion and the second electrically conductive layer relating to the second extension portion.

6. The pressure detection unit according to claim 4 or 5, wherein the electrically conductive layers are comprised of carbon layers containing carbon particles mixed with binder .

7. The pressure detection unit according to any one of claims 1-6, further comprising a load transmission member provided on the outer face of at least one of the first substrate and the second substrate for applying a concentrated load to the pressure sensitive layers.

8. A pressure detection unit disposed in a peripheral portion of a panel member of an information input device in order to detect a press operation to the panel member, the pressure detection unit comprising:
a first substrate;
a second substrate disposed to face the first substrate;
pressure sensitive layers disposed between the first substrate and the second substrate;
a first electrode provided on the first substrate and a second electrode provided on the second substrate for detecting resistance change via the pressure sensitive layers, respectively; and
a load transmission member provided on the outer face of at least one of the first substrate and the second substrate for applying a concentrated load to the pressure sensitive layers:
wherein relative to a pressure sensitive area formed by compression of the pressure sensitive layers when the pressure detection unit is pressed, as seen along the direction of normal line of the panel member, a portion of the edge of the load transmission member is overlapped with the pressure sensitive area and the rest of the edge is not overlapped with the pressure sensitive area.

9. The pressure detection unit according to claim 8, wherein the first substrate and the second substrate are connected with each other via a connecting portion at a position different from the pressure sensitive area; and
as seen along the direction of the normal line of the panel member, a portion of the rest of the edge of the load transmission member is overlapped with the connecting portion.

10. The pressure detection unit according to claim 8 or 9, wherein as seen along the direction of normal line of the panel member, a portion of the rest of the edge of the load transmission member is located on the outer edge side of the panel member relative to the pressure sensitive area; and
at the outer edge of the panel member, the edge of the first substrate, the connecting portion, the edge of the second substrate and a potion of the rest of the edge are overlapped with each other.

11. The pressure detection unit according to any one of claims 8-10, wherein the first electrode and the second electrodes are provided at positions not facing each other on the normal lines of the first substrate and the second substrate.

12. A pressure sensitive sensor, comprising:
the pressure detection unit according to any one of claims 1-11, the pressure detection unit being provided in a peripheral portion of a panel which peripheral portion is fixed to a housing body in order to detect a press operation to the panel member; and
a floating prevention mechanism for preventing floating of the corner portion of the panel member off the housing body when a press operation is effected to the panel member.

13. The pressure sensitive sensor according to claim 12, wherein the floating prevention mechanism comprises a bonding portion of the corner portion formed wider than a bonding area in the peripheral portion excluding the corner portion.

14. The pressure sensitive sensor according to claim 12 or 13, wherein the pressure detection unit is provided only in the area excluding the corner portion.

15. An information input device comprising:
a panel member capable of receiving input instruction by a press operation;
a support portion provided in a device body for supporting the peripheral portion of the panel member; and
the pressure detection unit according to any one of claims 1-11 provided between the panel member and the support portion.

16. An information input device wherein the pressure sensitive sensor according to any one claims 12-14 is sandwiched between the housing body and the panel member.
